# EUROPEAN PATENT SPECIFICATION

(11) **EP 3 152 403 B1**
(45) Date of publication and mention of the grant of the patent: **25.05.2022**
(21) Application number: 15728368.0
(22) Date of filing: 02.06.2015
(51) Int. Cl.: F01D 5/22, F01D 5/34

(54) **TURBINE BLISK AND METHOD OF MANUFACTURING THEREOF**
TURBINEN-BLISK UND VERFAHREN ZUR HERSTELLUNG DAVON
DISQUE AUBAGÉ MONOBLOC ET SON PROCÉDÉ DE FABRICATION

(30) Priority: 09.06.2014 US 201414299538
(43) Date of publication of application: 12.04.2017
(73) Proprietor: General Electric Company, Schenectady, NY 12345 (US)
(72) Inventor: HOFER, Douglas, Carl, Niskayuna, NY 12309 (US); SAMPATH, Rajiv, Niskayuna, NY 12309 (US); SEVINCER, Edip, Niskayuna, NY 12309 (US); KRISHNAMOORTHY, Ganesh, Shoreline, WA 98133 (US); KALRA, Chiranjeev, Niskayuna, NY 12309 (US)
(74) Representative: Novagraaf Group
(86) International application number: PCT/US2015/033686
(87) International publication number: WO 2015/191330

(56) References cited:
- WO-A1-2013/150263
- DE-A1-102009 052 305
- US-A- 5 201 850
- US-B1- 6 371 727

## Description

### TECHNICAL FIELD

The present invention relates generally to turbine engines and, more specifically, to shrouded turbine blisks for use in turbine engines. In particular, the invention relates to a turbine blisk, a power generation system and a method of manufacturing a turbine blisk.

### BACKGROUND ART

US 5 201 850 A discloses a rotor tip shroud damper including damper wires. DE 10 2009 052305 A1 discloses a blisk.

At least some known axial flow turbine engines include a rotor shaft and at least one turbine stage coupled to the rotor shaft. At least some known stages include a disk and circumferentially-spaced apart rotor blades that extend radially outward from the disk. Each rotor blade includes an airfoil and a dovetail at its root where the dovetail is radially retained in a complementary slot in a perimeter of the disk. During operation, the disk and blades attached thereto rotate such that the blades develop a substantially centrifugal force, which is carried downwardly through the respective dovetails and into the disk. Other known stages include the rotor blades integrally manufactured with the disk as a one-piece component conventionally known as a blisk (i.e., bladed disk).

In at least some known rotary machines, the rotational speed of and/or aerodynamic forces acting on the rotating components induce vibration and axial torsion into the stages of the rotary machine. To limit such vibration and axial torsion, at least some known blades include integral shrouds extending from the airfoils at predetermined radial distances along each blade. For example, the integral shrouds facilitate increasing the overall stiffness of the stage to increase its vibrational frequencies into a more desirable range. Moreover, in stages where each rotor blade includes an individual airfoil/dovetail configuration, frictional damping between dovetails and their complementary retaining slots also facilitates supplementing damping to the rotating components. However, because known blisks including integral shrouds are manufactured as a one-piece component, such supplemental frictional damping cannot be provided to the components.

### BRIEF DESCRIPTION

The present invention is defined in the accompanying claims.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic illustration of an exemplary power generation system;
FIG. 2 is a perspective view of an exemplary blisk that may be used in the power generation system shown in FIG. 1;
FIG. 3 is an enlarged perspective view of the blisk shown in FIG. 2 taken along Area 3;
FIG. 4 is a schematic flow diagram illustrating an exemplary sequence of process steps of manufacturing the blisk shown in FIG. 2; and
FIG. 5 is a schematic flow diagram illustrating an exemplary sequence of process steps of defining a gap between adjacent shroud segments in the blisk shown in FIG. 2.

Unless otherwise indicated, the drawings provided herein are meant to illustrate features of embodiments of the invention These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

Embodiments of the present invention relate to turbine blisks having shroud segments integrated therein. In the exemplary embodiment, adjacent shroud segments are separated by a gap having a geometry that facilitates interlocking the adjacent shroud segments when torsional loading is applied to a rotor blade coupled to each shroud segment. Specifically, the gap geometry allows the rotor blades and the shroud segments to deflect as the rotational speed of the turbine blisk increases towards a predetermined rotational speed. As such, the gap geometry and gap size are selected to ensure frictional contact is achieved between adjacent shroud segments when the turbine blisk reaches the predetermined rotational speed, which increases frictional damping in the blisk assembly.

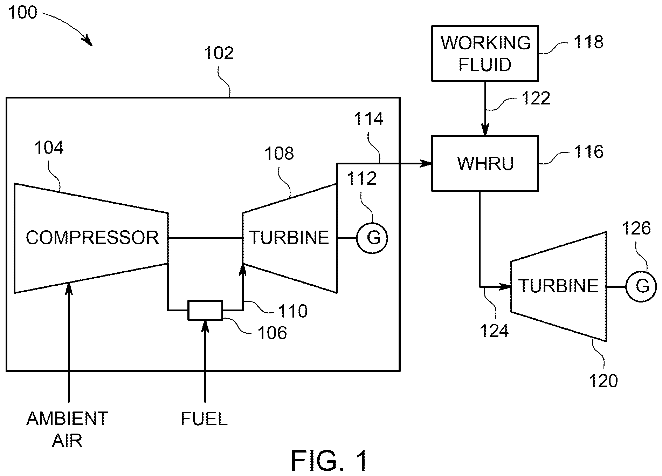

FIG. 1 is a schematic illustration of an exemplary power generation system 100. Power generation system 100 includes a gas turbine engine assembly 102 that includes a compressor 104, a combustor 106, and a first turbine 108 powered by expanding a flow of hot gas 110 produced in combustor 106 for driving a first electrical generator 112. A flow of exhaust gas 114 is channeled from turbine 108 towards a waste heat recovery unit (WHRU) 116 that recovers waste heat from exhaust gas 114. Power generation system 100 also includes a working fluid source 118 coupled in flow communication with WHRU 116, and a second turbine 120 coupled downstream from WHRU 116. A flow of working fluid 122 is channeled towards WHRU 116 and, in one embodiment, waste heat from exhaust gas 114 facilitates heating working fluid 122 to a supercritical state. Alternatively, working fluid 122 channeled towards WHRU 116 is in a supercritical state prior to entering WHRU 116. A flow of supercritical working fluid 124 is then channeled towards second turbine 120, which is powered by expanding the flow of supercritical working fluid 124 for driving a second electrical generator 126.

Working fluid 122 is any working fluid that enables power generation system 100 to function as described herein. Exemplary working fluids include, but are not limited to, carbon dioxide and steam. In an alternative embodiment, working fluid 122 may be heated by any heat source that enables power generation system 100 to function as described herein and may be in a non-supercritical state. For example, working fluid 122 may be heated by nuclear energy or concentrated solar energy.

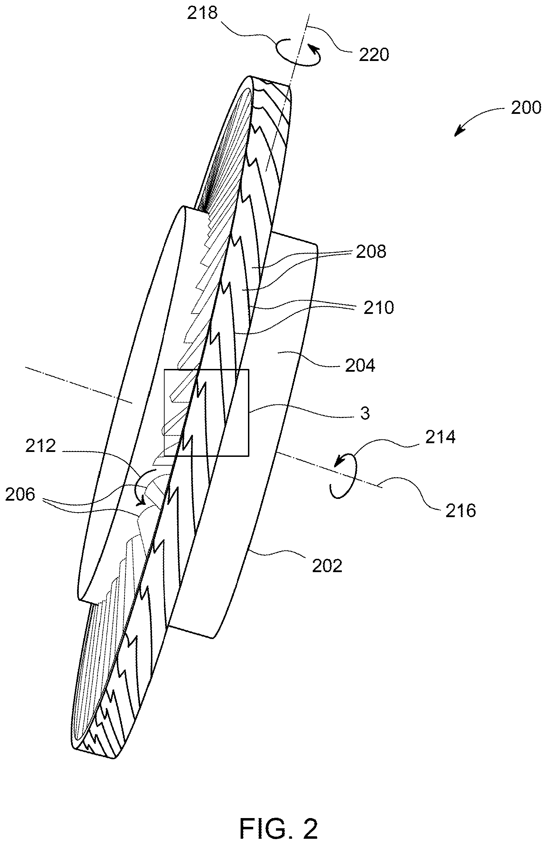

FIG. 2 is a perspective view of an exemplary blisk 200 that may be used in power generation system 100 (shown in FIG. 1). Specifically, blisk 200 is implemented in turbines 108 and 120, for example. In the exemplary embodiment, blisk 200 includes a central disk portion 202, an inner rim 204 surrounding central disk portion 202, and a plurality of rotor blades 206 extending radially outward from inner rim 204. Rotor blades 206 are positioned at regularly-spaced intervals about a circumference (not shown) of inner rim 204, and each rotor blade 206 has a substantially airfoil cross-sectional shape. Blisk 200 also includes a shroud segment 208 integrally coupled to each of the plurality of rotor blades 206. Shroud segments 208 are integrally coupled at any axial location along rotor blades 206 that enables blisk 200 to function as described herein. Moreover, as will be described in more detail below, a gap 210 is defined between adjacent shroud segments 208. Gap 210 has a geometry that allows adjacent shroud segments 208 to interlock when a torsional force 212 is applied to rotor blades 206. In an alternative embodiment, gap 210 is defined such that shroud segments 208 are coupled to more than one rotor blade 206.

In operation, blisk 200 rotates in a circumferential direction 214 about a centerline axis 216 when rotor blades 206 are impinged by either hot gas 110 or working fluid 122 (each shown in FIG. 1), for example. As a rotational speed of blisk 200 increases, torsional force 212 causes rotor blades 206 and shroud segments 208 to deflect (i.e., untwist) in a rotational direction 218 about a radial axis 220 of blisk 200. A size of gap 210 is selected that allows rotor blades 206 and shroud segments 208 to deflect in rotational direction 218, and that facilitates frictional damping between adjacent shroud segments 208 when power generation system 100 (shown in FIG. 1) reaches a predetermined speed.

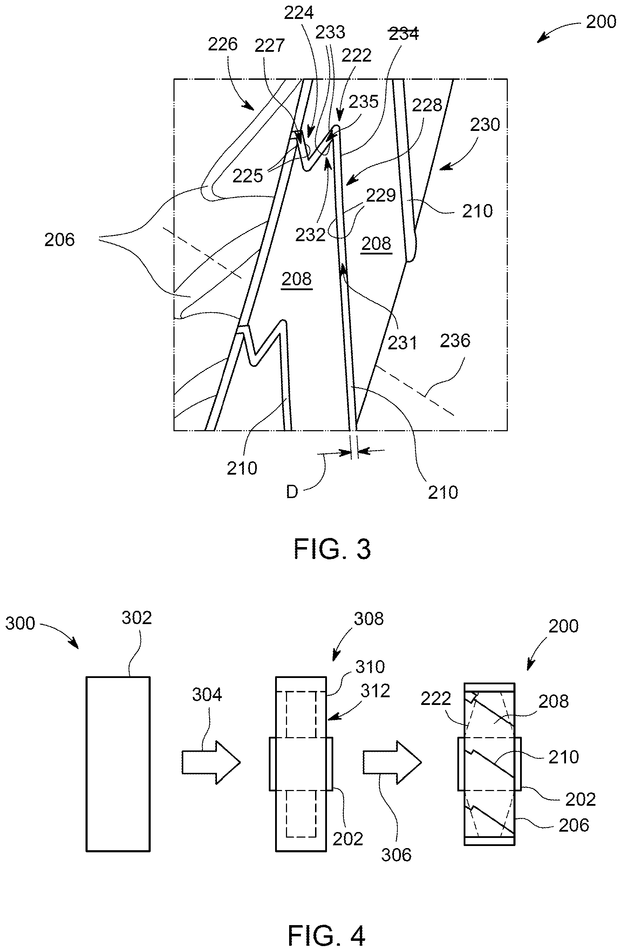

FIG. 3 is an enlarged perspective view of blisk 200 taken along Area 3 (shown in FIG. 2). As described above, gap 210 has a geometry that facilitates interlocking adjacent shroud segments 208 when torsional force 212 (shown in FIG. 2) is applied to rotor blades 206. In the exemplary embodiment, gap 210 has a Z-notch configuration 222 that facilitates defining complementary abutting side wall pairs between adjacent shroud segments 208 that each extend in a different orientation. Specifically, a first complementary side wall pair 224 includes first side walls 225, a second complementary side wall pair 228 includes second side walls 229, and a third complementary side wall pair 232 includes third side walls 233 that each extend between adjacent shroud segments 208. First complementary side wall pair 224 extends from a first side 226 of blisk 200, second complementary side wall pair 228 extends from a second side 230 of blisk 200, and third complementary side wall pair 232 extends between first and second side wall pairs 224 and 228. First side walls 225 define a first truncated gap portion 227 therebetween, second side walls 229 define a second truncated gap portion 231 therebetween, and third side walls 233 define a third truncated gap portion 235 therebetween. Moreover, each complementary side wall pair 224, 228, and 232 extends at oblique angles relative to each other. As such, the geometry of gap 210 is selected to facilitate frictional contact between third side walls 233 of third complementary side wall pair 232 as rotor blades 206 and shroud segments 208 deflect in rotational direction 218.

According to the invention, an orientation of gap 210 is selected to ensure a substantially continuous interface (not shown) is formed between side walls 225, 229, and 233 of adjacent shroud segments 208 when power generation system 100 (shown in FIG. 1) reaches a predetermined speed. Specifically, the orientation of gap 210 is selected such that third side wall pair 232 extends substantially perpendicularly relative to a centerline 236 of rotor blades 206. As such, gap 210 between third side wall pair 232 extends substantially perpendicularly relative to centerline 236 and the gap distance is selected to enhance deflection of rotor blades 206 and shroud segments 208, which also enhances frictional damping therebetween. First and second side wall pairs 224 and 228 extend from third side wall pair 232 in orientations that ensure gap 210 extends between adjacent rotor blades 206.

Gap 210 also defines a distance D between adjacent shroud segments 208 selected to ensure frictional contact between adjacent shroud segments 208 at predetermined operating conditions of power generation system 100. Distance D is selected as a function of at least one of a length (not shown) of rotor blades 206 and a predetermined rotational speed of blisk 200. For example, deflection in rotor blades 206 increases as at least one of the length of rotor blades 206 or rotational speed increases, and deflection in rotor blades 206 decreases as at least one of the length of rotor blades 206 or rotational speed decreases. As such, distance D increases as at least one of the length of rotor blades 206 or the rotational speed of blisk 200 increases to facilitate increasing deflection and that ensures frictional contact between adjacent shroud segments 208.

FIG. 4 is a schematic flow diagram illustrating a sequence 300 of process steps of manufacturing blisk 200 as set forth in claim 7. Therein, blisk 200 is manufactured from a single cylindrical billet 302 of material. Billet 302 is forged or cast from any material that enables blisk 200 to function as described herein. Features of blisk 200 are subsequently defined using any suitable material removal method, including, but not limited to, computer numerical control ("CNC") milling, electro-chemical machining ("ECM"), and electrical discharge machining ("EDM").

For example, in the exemplary embodiment, sequence 300 includes a first material removal step 304 and a second material removal step 306. In each of first and second material removal steps 304 and 306, material is removed using any of the above-mentioned material removal methods. First material removal step 304 includes removing material from billet 302 to form an intermediate blisk 308. Specifically, material is removed from billet 302 in a process such as turning or milling such that central disk portion 202, a substantially continuous integral shroud 310, and an outer rim 312 extending between central disk portion 202 and integral shroud 310 are defined therefrom.

Second material removal step 306 includes removing material from intermediate blisk 308 to facilitate forming blisk 200. Specifically, material is removed from outer rim 312 and integral shroud 310 in a process such as ECM or EDM to facilitate defining rotor blades 206 and shroud segments 208, respectively. Defining shroud segments 208 from integral shroud 310 includes defining gaps 210 having Z-notch configurations 222 in integral shroud 310. In an alternative embodiment, blisk 200 is formed using additive manufacturing techniques.

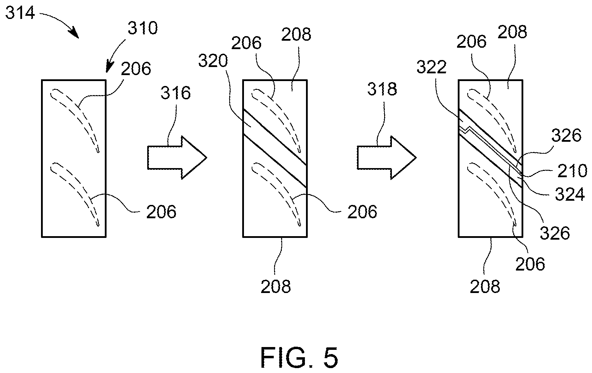

FIG. 5 is a schematic flow diagram illustrating an exemplary sequence 314 of process steps of defining gap 210 between adjacent shroud segments 208. As described above, gap distance D (shown in FIG. 3) is selected as a function of at least one of the length of rotor blades 206 and a predetermined rotational speed of blisk 200. When at least one of the length of rotor blades 206 or the predetermined rotational speed of blisk 200 are comparatively low, distance D required to ensure frictional contact between adjacent shroud segments 208 is also comparatively small. As such, defining gaps 210 in integral shroud 310 in a process such as ECM or EDM may be unable to define gaps 210 having the comparatively small distance D that will ensure frictional contact between adjacent shroud segments 208.

Sequence 314 includes a material removal step 316 and a material insertion step 318. Material removal step 316 includes removing material from integral shroud 310 such that a space 320 is defined between adjacent shroud segments 208. Space 320 is sized to receive a first shroud insert 322 and a second shroud insert 324 therein. Material insertion step 318 includes inserting first and second shroud inserts 322 and 324 within space 320, and coupling shroud inserts 322 and 324 to respective shroud segments 208. Shroud inserts 322 and 324 are preformed such that side walls 326 of each shroud insert 322 and 324 define gap 210. Shroud inserts 322 and 324 are coupled to respective shroud segments 208 in a process such as, but not limited to, brazing. As such, pre-forming and inserting shroud inserts 322 and 324 within space 320 facilitates defining gaps 210 of increasingly small sizes between adjacent shroud segments. For example, gap 210 defined by sequence 314 is either a zero gap or an interference fit such that adjacent shroud segments 208 are coupled together with an interference fit even when torsional force 212 (shown in FIG. 2) is not applied to rotor blades 206.

The assembly and methods described herein relate to turbine blisks designed to have improved vibrational damping characteristics. Specifically, the turbine blisks described herein include an integral shroud coupled to each rotor blade. A gap having a predetermined geometry is defined between adjacent shroud segments. The gap allows the rotor blades and the shroud segments to deflect as the rotational speed of the turbine blisk increases towards a predetermined rotational speed. As such, the gap size and geometry are selected such that the shroud segments interlock at the predetermined rotational speed, which provides frictional damping to the turbine blisk assembly.

An exemplary technical effect of the assemblies and methods described herein includes at least one of: (a) providing a shrouded blisk design without broached dovetail slots; (b) providing frictional damping to the blisk; and (c) providing a sequence of process steps for use in forming a frictional contact gap between shroud segments of an integral blisk when the desired gap distance is less than known machining tolerances.

Exemplary embodiments of the turbine blisk are described above in detail. The assembly is not limited to the specific embodiments described herein, but rather, components of systems and/or steps of the methods may be utilized independently and separately from other components and/or steps described herein. For example, the turbine blisk described herein may also be used in combination with other processes, and is not limited to practice with only turbine engines and related methods as described herein. Rather, the exemplary embodiment can be implemented and utilized in connection with many applications where a turbine blisk is operable with a working fluid.

This written description uses examples to disclose the embodiments of the present invention, including the best mode, and also to enable any person skilled in the art to practice embodiments of the present invention, including making and using any devices or systems and performing any incorporated methods. The scope of the invention described herein is defined by the appended claims.

## Claims

1. A turbine blisk (200) comprising:
an inner rim (204);
a plurality of adjacent rotor blades (206) extending radially outward from said inner rim (204);
a shroud segment (208) integrally coupled to each of said plurality of adjacent rotor blades (206), thereby forming a plurality of adjacent shroud segments; and
a gap (210) defined between each of said adjacent shroud segments (208), wherein said gap has a geometry that facilitates interlocking said plurality of adjacent shroud segments (208) when a torsional force is applied to said plurality of adjacent rotor blades (206);
wherein said gap defines a plurality of complementary side wall pairs (224, 228, 232) between each of said adjacent shroud segments (208), each of said plurality of complementary side wall pairs (224, 228, 232) extending at oblique angles relative to each other;
**characterized in that** at least one of said plurality of complementary side wall pairs (232) comprises side walls (233) that extend substantially perpendicularly relative to a centerline (236) of each of said plurality of adjacent rotor blades (206).

2. The turbine blisk in accordance with Claim 1, wherein at least one of said plurality of complementary side wall pairs (224, 228, 232) comprises side walls that are in frictional contact when the torsional force is applied to said plurality of adjacent rotor blades (206).

3. The turbine blisk in accordance with Claim 1 or Claim 2, wherein said gap defines a distance between each of said adjacent shroud segments (208) selected as a function of at least one of a length of said plurality of adjacent rotor blades (206) or a predetermined rotational speed of said turbine blisk (200).

4. The turbine blisk in accordance with any preceding Claim, wherein said gap (210) defines at least one of a zero gap or an interference fit between said adjacent shroud segments.

5. The turbine blisk in accordance with any preceding Claim, wherein said gap (210) comprises a Z-notch configuration.

6. A power generation system (100) comprising:
a source of working fluid (118); and
a turbine (120) coupled downstream from said source of working fluid, wherein said turbine comprises at least one turbine blisk (200) according to any one of the preceding claims.

7. A method of manufacturing a turbine blisk (200), said method comprising:
providing a solid billet of material (302);
defining an inner rim (204) from the solid billet of material (302);
defining a plurality of adjacent rotor blades (206) from the solid billet of material (302), the plurality of adjacent rotor blades (206) extending radially outward from the inner rim (204);
defining a shroud from the solid billet of material, the shroud integrally coupled to the plurality of adjacent rotor blades (206); and
defining a gap (210) in the shroud to form a shroud segment (208) integrally coupled to each of the plurality of adjacent rotor blades (206), thereby forming a plurality of adjacent shroud segments (208), wherein the gap (210) has a geometry that facilitates interlocking the plurality of adjacent shroud segments (208) when a torsional force is applied to the plurality of adjacent rotor blades (206);
wherein defining a gap comprises defining a plurality of complementary side wall pairs (224, 228, 232) between each of the plurality of adjacent shroud segments (208), each of the plurality of complementary side wall pairs extending at oblique angles relative to each other;
**characterized in that** defining a plurality of complementary side walls pairs comprises extending at least one of the plurality of complementary side wall pairs (232) substantially perpendicularly relative to a centerline (233) of each of the plurality of adjacent rotor blades (206).

8. The method in accordance with Claim 7, wherein defining a gap comprises selecting a distance between each of the plurality of adjacent shroud segments (208) as a function of at least one of a length of the plurality of adjacent rotor blades (206) or a predetermined rotational speed of the turbine blisk (200).

9. The method in accordance with Claim 7 or Claim 8, wherein defining a gap comprises:
removing material from the shroud to define a space between each of the plurality of adjacent shroud segments (208); and
inserting shroud inserts (322, 324) within the space such that the gap (210) is defined between the shroud inserts.

10. The method in accordance with Claim 9, further comprising pre-forming the shroud inserts (322, 324) such that side walls of each shroud insert define the gap.

11. The method in accordance with any of Claims 7 to 10, further comprising removing material from the solid billet of material (302) by at least one of computer numerical control milling, electro-chemical machining, or electrical discharge machining.

## Patentansprüche

1. Turbinen-Blisk (200), umfassend:
einen Innenrand (204);
eine Vielzahl von benachbarten Rotorblättern (206), die sich radial nach außen von dem Innenrand (204) erstrecken;
ein Ummantelungssegment (208), das einstückig mit jedem der Vielzahl von benachbarten Rotorblättern (206) gekoppelt ist, wodurch eine Vielzahl benachbarter Ummantelungssegmente gebildet wird; und
einen Spalt (210), der zwischen jedem der benachbarten Ummantelungssegmente (208) definiert ist, wobei der Spalt eine Geometrie aufweist, die das Ineinandergreifen der Vielzahl von benachbarten Ummantelungssegmenten (208) erleichtert, wenn eine Torsionskraft auf die Vielzahl von benachbarten Rotorblättern (206) ausgeübt wird;
wobei der Spalt eine Vielzahl von komplementären Seitenwandpaaren (224, 228, 232) zwischen jedem der benachbarten Ummantelungssegmente (208) definiert, wobei sich jedes der Vielzahl von komplementären Seitenwandpaaren (224, 228, 232) in schrägen Winkeln relativ zueinander erstreckt;
**dadurch gekennzeichnet, dass** mindestens eines der Vielzahl von komplementären Seitenwandpaare (232) Seitenwände (233) umfasst, die sich im Wesentlichen senkrecht zu einer Mittellinie (236) jedes der Vielzahl von benachbarten Rotorblättern (206) erstrecken.

2. Turbinen-Blisk nach Anspruch 1, wobei mindestens eines der Vielzahl von komplementären Seitenwandpaaren (224, 228, 232) Seitenwände umfasst, die in Reibungskontakt stehen, wenn die Torsionskraft auf die Vielzahl von benachbarten Rotorblättern (206) ausgeübt wird.

3. Turbinen-Blisk nach Anspruch 1 oder Anspruch 2, wobei der Spalt einen Abstand zwischen jedem der benachbarten Ummantelungssegmente (208) definiert, der in Abhängigkeit von mindestens einer Länge der Vielzahl von benachbarten Rotorblättern (206) oder einer vorbestimmten Drehzahl des Turbinen-Blisks (200) gewählt wird.

4. Turbinen-Blisk nach einem der vorstehenden Ansprüche, wobei der Spalt (210) mindestens eines von einem Nullspalt oder einer Presspassung zwischen den benachbarten Ummantelungssegmenten definiert.

5. Turbinen-Blisk nach einem der vorstehenden Ansprüche, wobei der Spalt (210) eine Z-Kerbkonfiguration umfasst.

6. Energieerzeugungssystem (100), umfassend:
eine Arbeitsfluidquelle (118); und
eine Turbine (120), die stromabwärts von der Arbeitsfluidquelle gekoppelt ist, wobei die Turbine mindestens einen Turbinen-Blisk (200) nach einem der vorstehenden Ansprüche umfasst.

7. Verfahren zum Herstellen eines Turbinen-Blisks (200), wobei das Verfahren umfasst:
Bereitstellen eines festen Blocks von Material (302);
Definieren eines Innenrands (204) aus dem festen Block von Material (302);
Definieren einer Vielzahl von benachbarten Rotorblättern (206) aus dem festen Block von Material (302), wobei die Vielzahl benachbarter Rotorblätter (206) sich radial nach außen vom Innenrand (204) erstreckt;
Definieren einer Ummantelung aus dem festen Block von Material, wobei die Ummantelung einstückig mit der Vielzahl von benachbarten Rotorblättern (206) gekoppelt ist; und
Definieren eines Spalts (210) in der Ummantelung, um ein Ummantelungssegment (208) zu bilden, das einstückig mit jeder der Vielzahl von benachbarten Rotorblättern (206) gekoppelt ist, wodurch eine Vielzahl von benachbarten Ummantelungssegmenten (208) gebildet wird, wobei der Spalt (210) eine Geometrie aufweist, die das Ineinandergreifen der Vielzahl von benachbarten Ummantelungssegmenten (208) erleichtert, wenn eine Torsionskraft auf die Vielzahl von benachbarten Rotorblättern (206) ausgeübt wird;
wobei das Definieren eines Spalts das Definieren einer Vielzahl von komplementären Seitenwandpaaren (224, 228, 232) zwischen jedem der Vielzahl von benachbarten Ummantelungssegmenten (208) umfasst, wobei sich jedes der Vielzahl von komplementären Seitenwandpaaren in schrägen Winkeln relativ zueinander erstreckt;
**dadurch gekennzeichnet, dass** das Definieren einer Vielzahl von komplementären Seitenwandpaaren das Erstrecken von mindestens einem der Vielzahl von komplementären Seitenwandpaaren (232) im Wesentlichen senkrecht relativ zu einer Mittellinie (233) von jedem der Vielzahl von benachbarten Rotorblättern (206) umfasst.

8. Verfahren nach Anspruch 7, wobei das Definieren eines Spaltes das Auswählen eines Abstandes zwischen jedem der Vielzahl von benachbarten Ummantelungssegmenten (208) in Abhängigkeit von mindestens einem von einer Länge der Vielzahl von benachbarten Rotorblättern (206) oder einer vorbestimmten Drehzahl der Turbinenschaufel (200) umfasst.

9. Verfahren nach Anspruch 7 oder Anspruch 8, wobei das Definieren eines Spaltes Folgendes umfasst:
Entfernen von Material von der Ummantelung, um einen Raum zwischen jedem der Vielzahl von benachbarten Ummantelungssegmenten (208) zu definieren; und
Einsetzen von Ummantelungseinsätzen (322, 324) innerhalb des Raums, sodass der Spalt (210) zwischen den Ummantelungseinsätzen definiert ist.

10. Verfahren nach Anspruch 9, ferner umfassend das Vorformen der Ummantelungseinsätze (322, 324), sodass Seitenwände jedes Ummantelungseinsatzes den Spalt definieren.

11. Verfahren nach einem der Ansprüche 7 bis 10, ferner umfassend das Entfernen von Material aus dem festen Block von Material (302) durch mindestens eines von computer-numerisch gesteuertem Fräsen, elektrochemischer Bearbeitung oder funkenerosiver Bearbeitung.

## Revendications

1. Disque aubagé monobloc de turbine (200) comprenant :
une jante intérieure (204) ;
une pluralité de lames de rotor adjacentes (206) s'étendant radialement vers l'extérieur à partir de ladite jante intérieure (204) ;
un segment de carénage (208) couplé d'un seul tenant à chacune de ladite pluralité de lames de rotor adjacentes (206), formant de ce fait une pluralité de segments de carénage adjacents ; et
un écartement (210) défini entre chacun desdits segments de carénage adjacents (208), dans lequel ledit écartement a une géométrie qui facilite l'interverrouillage de ladite pluralité de segments de carénage adjacents (208) lorsqu'une force de torsion est appliquée à ladite pluralité de lames de rotor adjacentes (206) ;
dans lequel ledit écartement définit une pluralité de paires de parois latérales complémentaires (224, 228, 232) entre chacun desdits segments de carénage adjacents (208), chacune de ladite pluralité de paires de parois latérales complémentaires (224, 228, 232) s'étendant à des angles obliques les unes par rapport aux autres ;
**caractérisé en ce qu'au** moins l'une de ladite pluralité de paires de parois latérales complémentaires (232) comprend des parois latérales (233) qui s'étendent sensiblement perpendiculairement par rapport à une ligne centrale (236) de chacune de ladite pluralité de lames de rotor adjacentes (206).

2. Disque aubagé monobloc de turbine selon la revendication 1, dans lequel au moins l'une de ladite pluralité de paires de parois latérales complémentaires (224, 228, 232) comprend des parois latérales qui sont en contact par frottement lorsque la force de torsion est appliquée à ladite pluralité de lames de rotor adjacentes (206).

3. Disque aubagé monobloc de turbine selon la revendication 1 ou la revendication 2, dans lequel ledit écartement définit une distance entre chacun desdits segments de carénage adjacents (208) sélectionnée en guise de fonction d'au moins l'une d'une longueur de ladite pluralité de lames de rotor adjacentes (206) ou d'une vitesse de rotation prédéterminée dudit disque aubagé monobloc de turbine (200).

4. Disque aubagé monobloc de turbine selon l'une quelconque revendication précédente, dans lequel ledit écartement (210) définit au moins l'un d'un écartement nul ou d'un ajustement serré entre lesdits segments de carénage adjacents.

5. Disque aubagé monobloc de turbine selon l'une quelconque revendication précédente, dans lequel ledit écartement (210) comprend une configuration à encoche en Z.

6. Système de génération d'énergie (100) comprenant :
une source de fluide de travail (118) ; et
une turbine (120) couplée en aval à partir de ladite source de fluide de travail, dans lequel ladite turbine comprend au moins un disque aubagé monobloc de turbine (200) selon l'une quelconque des revendications précédentes.

7. Procédé de fabrication d'un disque aubagé monobloc de turbine (200), ledit procédé comprenant :
la fourniture d'une billette solide de matériau (302) ;
la définition d'une jante intérieure (204) à partir de la billette solide de matériau (302) ;
la définition d'une pluralité de lames de rotor adjacentes (206) à partir de la billette solide de matériau (302), la pluralité de lames de rotor adjacentes (206) s'étendant radialement vers l'extérieur à partir de la jante intérieure (204) ;
la définition d'un carénage à partir de la billette solide de matériau, le carénage couplé d'un seul tenant à la pluralité de lames de rotor adjacentes (206) ; et
la définition d'un écartement (210) dans le carénage pour former un segment de carénage (208) couplé d'un seul tenant à chacune de la pluralité de lames de rotor adjacentes (206), formant de ce fait une pluralité de segments de carénage adjacents (208), dans lequel l'écartement (210) a une géométrie qui facilite l'interverrouillage de la pluralité de segments de carénage adjacents (208) lorsqu'une force de torsion est appliquée à la pluralité de lames de rotor adjacentes (206) ;
dans lequel la définition d'un écartement comprend la définition d'une pluralité de paires de parois latérales complémentaires (224, 228, 232) entre chacun de la pluralité de segments de carénage adjacents (208), chacune de la pluralité de paires de parois latérales complémentaires s'étendant à des angles obliques les unes par rapport aux autres ;
**caractérisé en ce que** la définition d'une pluralité de paires de parois latérales complémentaires comprend l'extension d'au moins l'une de la pluralité de paires de parois latérales complémentaires (232) sensiblement perpendiculairement par rapport à une ligne centrale (233) de chacune de la pluralité de lames de rotor adjacentes (206).

8. Procédé selon la revendication 7, dans lequel la définition d'un écartement comprend la sélection d'une distance entre chacun de la pluralité de segments de carénage adjacents (208) en guise de fonction d'au moins l'une d'une longueur de la pluralité de lames de rotor adjacentes (206) ou d'une vitesse de rotation prédéterminée du disque aubagé monobloc de turbine (200).

9. Procédé selon la revendication 7 ou la revendication 8, dans lequel la définition d'un écartement comprend :
le retrait de matériau à partir du carénage pour définir un espace entre chacun de la pluralité de segments de carénage adjacents (208) ; et
l'insertion d'inserts de carénage (322, 324) au sein de l'espace de telle sorte que l'écartement (210) est défini entre les inserts de carénage.

10. Procédé selon la revendication 9, comprenant en outre la préformation des inserts de carénage (322, 324) de telle sorte que des parois latérales de chaque insert de carénage définissent l'écartement.

11. Procédé selon l'une quelconque des revendications 7 à 10, comprenant en outre le retrait de matériau à partir de la billette solide de matériau (302) par au moins l'un d'un fraisage à commande numérique par ordinateur, d'un usinage électrochimique, ou d'un usinage par décharge électrique.
